# EUROPÄISCHE PATENTSCHRIFT

(11) **EP 2 342 061 B1**
(45) Veröffentlichungstag und Bekanntmachung des Hinweises auf die Patenterteilung: **09.11.2016**
(21) Anmeldenummer: 09783274.5
(22) Anmeldetag: 22.09.2009
(51) Int. Cl.: B29C 47/38, B29C 47/76, B29C 47/08

(54) **VERFAHREN UND VORRICHTUNG ZUM ENTGASEN EINES GEMISCHES INSBESONDERE AUS POLYMEREN BINDEMITTELN**
METHOD AND DEVICE FOR DEGASSING A MIXTURE COMPRISING POLYMERIC BINDERS IN PARTICULAR
PROCÉDÉ ET DISPOSITIF DE DÉGAZAGE D'UN MÉLANGE NOTAMMENT COMPOSÉ DE LIANTS POLYMÈRES

(30) Priorität: 23.09.2008 DE 102008048598
(43) Veröffentlichungstag der Anmeldung: 13.07.2011
(73) Patentinhaber: Adm-Isobloc GmbH, 41379 Brüggen (DE)
(72) Erfinder: PATZKE, Stefan, 47906 Kempen (DE)
(74) Vertreter: Braun-Dullaeus, Karl-Ulrich
(86) Internationale Anmeldenummer: PCT/EP2009/062249
(87) Internationale Veröffentlichungsnummer: WO 2010/034704

(56) Entgegenhaltungen:
- DE-A1- 1 529 834
- DE-A1- 2 038 452
- DE-A1- 2 451 886
- DE-A1- 3 818 003
- DE-B- 1 153 887
- DE-B- 1 201 041
- US-A1- 2006 054 661

## Beschreibung

Die Erfindung betrifft eine Vorrichtung und ein Verfahren zum Entgasen eines Gemisches enthaltend trennbare Komponenten unterschiedlicher Dichte, insbesondere eines gefüllten oder ungefüllten Bindemittelsystems, wobei das Gemisch von einer in einem Gehäuse um eine Rotationsachse umlaufenden Förderschnecke in einem kontinuierlichen Förderstrom zu einer zum Entgasen geeigneten Vakuumkammer befördert wird, wobei der Förderstrom durch einen insbesondere als Ringspalt ausgebildeten Einlasskanal in die Vakuumkammer eingepresst wird, wobei der Förderstrom den Einlasskanal abdichtet.

Derartige Vorrichtungen sind aus dem Bereich der Herstellung von Duroplasten und von Polymerbeton bekannt, wo zunächst verschiedene Komponenten, wie Kunstharze und Füllstoffe, zusammengebracht und dann mittels der in einem rohrförmigen Gehäuse laufenden Misch- und Förderschnecke vermengt werden. Bekanntermaßen ist es jedoch problematisch, dass ein solches Gemisch, nachfolgend auch "Compounds"; je nach Zusammensetzung eine große Menge an Lufteinschlüssen enthalten kann. Damit der Compound sich auch zur Herstellung von Bauteilen mit hoher Oberflächengüte und großer Stabilität, wie beispielsweise Waschbecken oder Badewannen, eignet, müssen die Lufteinschlüsse entfernt werden, was bekanntermaßen durch eine dem Mischvorgang nachfolgende Entgasung geschieht.

Dazu ist es aus dem DE 38 18 003 C2 bekannt, zur Entgasung eine sich an die Mischstrecke anschließende Vakuumkammer einzusetzen, in die der von der Förderschnecke angetriebene Compound durch einen die Welle umgebenden verhältnismäßig engen Ringspalt eingepresst wird. Da dieses Einpressen kontinuierlich erfolgt, dichtet der ständig mit Compound gefüllte Ringspalt die Vakuumkammer gegen den Atmosphärendruck ab. Nach dem DE 38 18 003 C2 wird der Ringspalt dadurch ausgebildet, dass auf der Schneckenwelle, ein in Förderrichtung konisch nach Außen laufendes Druckstück aufgesetzt ist, das den Förderstrom gegen die Innenwandung der Mischrohrbuchse führt. Die Weite des Ringspaltes wird dabei durch den Durchmesser des Druckstückes im Verhältnis zum Innendurchmesser des rohrförmigen Gehäuses definiert.

DE 2038452 A1 offenbart den Oberbegriff der unabhängigen Ansprüche.

Bekanntermaßen ist es jedoch gerade bei der Verarbeitung von Duroplasten ein großes Problem, dass ein solches Gemisch insbesondere ein mit Füllstoffen versehener Compound, wie beispielsweise ein Polymerbeton, wegen der durch die Schnecke verursachten Zentrifugalkräfte eine teilweise Trennung der Komponenten erfährt. Diese Trennung ist bei der Verarbeitung von Thermoplasten, die in dieser Verarbeitungsstufe eine einheitliche Masse bilden, nicht zu beobachten. Im Falle der Duroplaste führen die sich Außen ansammelnden schwereren grobkörnigen Füllstoffe, die mit hoher Geschwindigkeit durch den Ringspalt hindurch gepresst wird, zu einem starken Abrieb an der Innenwandung der Mischrohrbuchse. In Folge dessen muss diese ständig ausgetauscht werden, was zur starken Verringerung der Standzeiten dieser Anlagen und zu entsprechend hohen Kosten führt.

Die Aufgabe der vorliegenden Erfindung liegt nunmehr darin, ein Verfahren zum Entgasen eines Gemisches, insbesondere zur Herstellung von Duroplasten, vorzuschlagen, das sich mit konstruktiv einfachen und kostengünstigen Mitteln umsetzen lässt und das ein den Abrieb und damit den Verschleiß im Umfeld der Einlassöffnung wesentlich verringert. Zudem ist es Aufgabe der Erfindung eine konstruktiv einfache Vorrichtung zur Umsetzung des Verfahrens zu schaffen.

Diese Aufgaben werden durch das Verfahren mit den Merkmalen des Anspruch 1 und die Vorrichtung nach Anspruch 7 gelöst. Vorteilhafte Ausführungsformen sind in den jeweiligen Unteransprüchen genannt.

Der wesentliche Grundgedanke liegt darin, mittels einer im Gehäuse befindlichen Mischrohrbuchse mit einem in Förderrichtung konisch nach Innen zulaufenden Trichterbereich auf das im Förderstrom befindliche Gemisch ("Compound") eine entgegen der durch die sich schnell drehende Förderwelle erzeugte Zentrifugalkraft nach Innen gerichtete Kraft auszuüben, bevor der Compound als gefülltes oder ungefülltes Bindemittelsystem in den zur Vakuumkammer führenden Einlasskanal eintritt. Ein solcher Compound zur Herstellung von Duroplasten kann Komponenten enthalten, deren Dichten das Spektrum im Bereich zwischen 0,05 g/cm³ und 19 g/cm³ abdecken.

Wie schon oben erwähnt, beruht die Vorgehensweise im Wesentlichen auf der Erkenntnis, dass sich bei der aus dem Stand der Technik bekannten Verfahrensweise unterschiedlich dichte Komponenten in dem durch die Förderschnecke "zentrifugierten" Compound teilweise trennen, wobei die dichteren Komponenten, insbesondere die Füllstoffe, nach Außen drängen und dort verstärkt an der Innenfläche des rohrförmigen Gehäuses entlang reiben. Um diesen Effekt, der auch zu einer Verschlechterung der dichtenden Wirkung im Einlasskanal führt, zu verringern, werden zumindest die am Außenrand liegenden Bereiche des Förderstroms durch Vorsehung der Mischrohrbuchse mit konisch nach Innen zulaufendem Trichterbereich vor dem Eintritt in den zur Vakuumkammer führenden Einlasskanal entgegen der von der Förderschnecke, hervorgerufenen Fliehkraft nach Innen, also in Richtung der Rotationsachse der Förderschnecke, abgelenkt. Auf diese Weise bekommen die nach Außen drängenden Komponenten des Compounds einen Impuls nach Innen, so dass sich der Compound quasi noch einmal vermischt.

Tatsächlich weisen Mischrohrbuchsen einen wesentlich geringeren Abrieb als die bislang im Stand der Technik verwendeten auf und tragen damit zu einer erheblichen Verlängerung der Standzeiten und einer maßgeblichen Reduzierung der Kosten für die zur Herstellung von duroplastischem Compound oder Polymerbeton benutzten Maschinen bei. Ein weiterer wesentlicher Vorteil ist, dass die den Einlasskanal abdichtenden Eigenschaften des noch einmal "durchmischten" Compounds wesentlich besser sind, als die des bislang nach der Methode des Standes der Technik geförderten Compounds, bei dem es zu starken Separierungen gekommen ist.

Besonders vorteilhaft lässt sich die Erfindung einsetzen bei der Verarbeitung von Compounds als gefüllte oder ungefüllte Bindemittelsysteme, die zur Herstellung von "engineered stone", von Polymerbeton, von Mineralguss oder von "solid surface" eingesetzt werden. Gerade bei diesen Systemen kommt es auf eine besonders schnelle und saubere Verarbeitung an, da sie teilweise innerhalb von kürzester Zeit, zum Teil sogar von weniger als 2 Minuten, abbinden und hart wie Beton werden. Damit können sie die verarbeitende Vorrichtung erheblich beschädigen.

Auch wenn der Effekt schon bei einem nicht mit Füllstoff versetzten Gemisch zu beobachten ist, so ist die Vorgehensweise besonders vorteilhaft für Gemische mit Füllstoffen, wobei als Füllstoffe insbesondere Sieblinien organischer und anorganischer Füllstoffe verwendet werden, deren Korngrößen in den Bereich von bis zu etwa 20mm hinreichen. Als Füllstoffe können entsprechende Sieblinien von Quarzsand verwendet werden. In einer anderen Ausführungsform werden dem Compound Füllstoffe in Form weniger Millimeter langer Fasern, beispielsweise Glas- oder Kohlefasern, beigemengt.

So hat es sich als besonders effektiv herausgestellt, dass die Mischrohrbuchse insgesamt wie ein Trichter wirkt, durch dessen Hals die Welle der Förderschnecke verläuft. Diese Trichterform hat den Vorteil, dass der komplette Förderstrom nach Innen gelenkt wird, wo wegen des geringeren Durchmessers die von der Förderschnecke ausgeübte Zentrifugalkraft entsprechend kleiner ist. Wegen der geringeren Zentrifugalkraft findet beim Durchtritt durch den Ringspalt nur noch eine unerhebliche Trennung des Gemisches statt. Auf diese Weise kann eine hohe Dichtwirkung des Gemisches innerhalb des Ringspaltes bei geringem Verschleiß gewährleistet werden. Eine solche Mischrohrbuchse ist von einfacher Geometrie und daher im Falle der hier verwendeten Compounds einfach und schnell zu reinigen. Dabei ist es besonders vorteilhaft, wenn die Mischrohrbuchse zweiteilig ausgebildet ist und mit wenigen Handgriffen innerhalb der kurzen Zeit bis zum Aushärten ausgebaut werden kann.

Es ist besonders vorteilhaft, wenn der Halsbereich, der eine Rückstauzone vor der Entgasungskammer bildet, eine verhältnismäßig große Länge insbesondere von mehr als der Hälfte des Innendurchmessers aufweist. Damit kann gewährleistet werden, dass immer genügend "Dichtmaterial" im Ringspalt ist und keine Trennung der Komponenten in der Vakuumzone geschieht. Davon abgesehen, dass eine mehr oder weniger flexible Dichtlippe nicht zu einer Kompensation der Komponententrennung führt, wird auch dieser Effekt durch eine Dichtlippe nicht erreicht, da diese keine Abdichtung über eine längere Strecke gewährleisten kann.

Im Verhältnis zum bekannten Stand der Technik hat die Erfindung auch den weiteren Vorteil, dass nicht wie bisher ein separates Bauteil auf die Welle der Förderschnecke aufgebracht werden muss, das wegen der hohen Drehzahlen entsprechend gut ausgewuchtet sein muss, um nicht die sich drehende Welle zu beeinträchtigen. Statt dessen kann das Bauteil von einer als starres Rohrstück ausgebildeten Mischrohrbuchse mit trichterförmiger Ausnehmung realisiert sein, wobei diese, wie gesagt, zum Zwecke der einfacheren Montage vorteilhafterweise zweiteilig ausgebildet ist. Vorrichtungen mit einer solchen Mischrohrbuchse sind somit besonders wartungsfreundlich.

In einer besonders vorteilhaften Ausführungsform weist die Mischrohrbuchse eine Nute als vergrößerten Durchgang zu der Vakuumkammer auf, durch den hindurch größere Partikel der Sieblinie, die nicht durch den Ringspalt gehen, abgeleitet werden. Diese Nute, die axial ausgerichtet sein kann, hat denn auch eine Tiefe, die größer als die Weite des Ringspaltes ist und damit insbesondere mehrere Millimeter, beispielsweise bei Einsatz entsprechender Füllstoffe bis zu 30 mm, aufweist. Dabei ist eine Tiefe der Nute vorzusehen, die etwa dem 1,5 fachen des Durchmessers des größten zu erwartenden Kornes entspricht.

Mit der Vorgehensweise ist es denn auch möglich, die Förderschnecken mit hohen Drehzahlen zu betreiben, die mindestens im Bereich zwischen 500 und 1500 Umdrehungen pro Minute, je nach Größe der Förderschnecke, liegen. Je nach dem kann das Gemisch mit einer Fördergeschwindigkeit von wesentlich mehr als einem Meter pro Minute in dem insbesondere rohrförmig ausgebildeten Gehäuse transportiert werden. Dabei hat es sich als vorteilhaft herausgestellt, je nach Art der Anlage Fördergeschwindigkeiten zwischen 2 und 12 m/min einzustellen. Auf der Grundlage dieser Parameter kann der Prozess des Mischens und Entgasens im Verhältnis zu bisher noch weiter beschleunigt werden, zumal die genannten Größen keineswegs die Grenzwerte darstellen.

Nachfolgend wird die Erfindung anhand der Figuren 1 bis 3 näher erklärt. Es zeigen
- **Figur 1**: eine Mischrohrbuchse nach dem Stand der Technik,
- **Figur 2:**: eine Mischrohrbuchse in Schnittzeichnung und
- **Figur 3:**: eine Mischrohrbuchse in perspektivischer und in Schnittansicht.

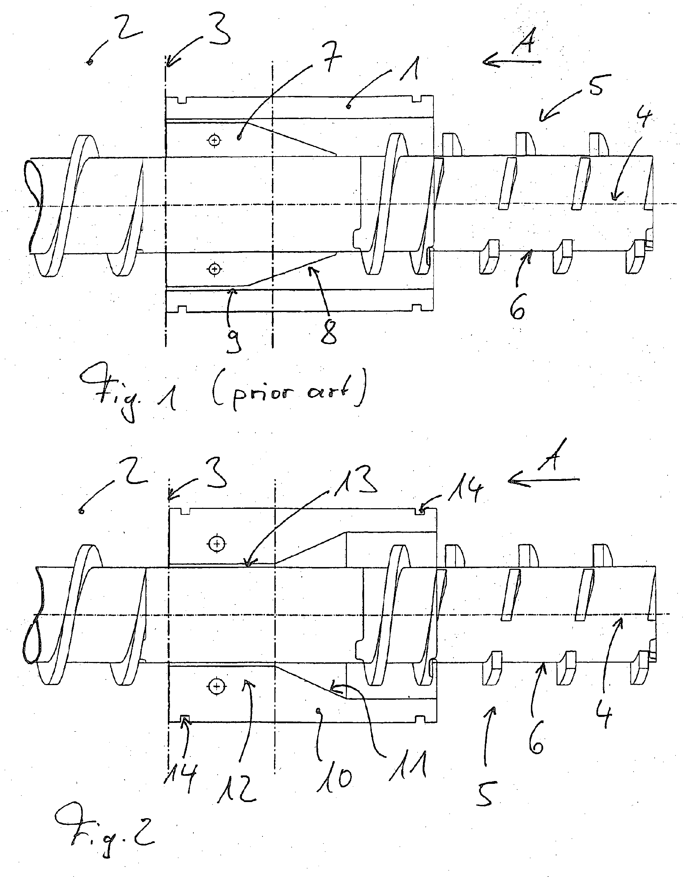

In Figur 1 ist eine Mischrohrbuchse 1 als Teil einer Vorrichtung zum Entgasen eines Gemisches nach dem Stand der Technik ("prior art") beispielsweise nach DE 38 18 003 C2 gezeigt. Diese ist als ein Rohrstück ausgebildet, das am Eingang zu einer nicht dargestellten Vakuumkammer in die Anordnung eingebaut ist. Hier ist die Grenze zum Vakuumbereich 2 durch die unterbrochene Linie 3 angedeutet. Vor der unterbrochenen Linie 3 herrscht Atmosphärendruck.

Der zu mischende Compound wird in einem nicht dargestellten rohrförmigen Gehäuse mittels einer um eine Rotationsachse 4 umlaufenden Förderschnecke 5 in Förderrichtung (Pfeil A) transportiert. Die Förderschnecke 5 führt das Gemisch der am Ende der Mischstrecke befindlichen Vakuumkammer zu, wobei die Mischrohrbuchse 1 am Ende der Mischstrecke angeordnet ist. Auf der Welle 6 der Förderschnecke 5 ist nach dem Stand der Technik ein konusförmiges Druckstück 7 aufgeschraubt, an dessen ansteigender Fläche 8 der transportierte Compount in einen als Ringspalt ausgebildeten und in die Vakuumkammer führenden Einlasskanal 9 gepresst wird.

In Figur 2 ist nunmehr eine ähnliche Vorrichtung jedoch mit einer Mischrohrbuchse 10 gezeigt. Im Gegensatz zum Stand der Technik ist in diesem Fall das Rohrstück mit einer trichterartig nach Innen in Richtung der Rotationsachse 4 laufenden Innenwandung 11 geformt. Mit dieser trichterförmigen die Welle 6 der Misch- und Förderschnecke 5 umgebenden Mischrohrbuchse 11 wird der sich in Förderrichtung (Pfeil A) bewegende Compound nach Innen abgelenkt, wobei der Halsbereich 12 der trichterförmigen Mischrohrbuchse 10 die Welle 6 unter Verbleib eines Ringspaltes 13 umgibt. Der Ringspalt 13 hat eine Spaltweite zwischen einem und wenigen Millimetern, insbesondere von etwa 2 Millimetern. Der Halsbereich (12) weist eine Länge von mehr als der Hälfte des Innendurchmessers auf.

Auf diese Weise wirkt die Innenwandung 11 als ein vor dem Eintritt in den Einlasskanal angeordnetes Mittel, das eine zumindest auf Außen liegende Bereiche des Förderstroms wirkende Kraft hervorruft, wobei diese Kraft entgegen der von der Förderschnecke hervorgerufenen Fliehkraft nach Innen in Richtung der Rotationsachse **4** wirkt. Je nach Dimensionierung der Anlage ist und des zu verarbeitenden Compounds ist der Trichterbereich so vorzusehen, dass es zu einer Kompensation der Trennung von Komponenten kommt. Dabei muss die Kompensation nicht unbedingt durch einen solchen Trichter hervorgerufen werden. Es ist auch denkbar, andere gleichwirkende Strukturen in dem Förderstrom vorzusehen.

Die Mischrohrbuchse 10 weist am Umfang Dichtnuten **14** auf, in denen entsprechende Dichtringe einliegen und die eingebaute Mischrohrbuchse 10 gegen die Vakuumkammer andererseits und gegen das vom Compound durchströmte rohrförmige Gehäuse andererseits abdichten.

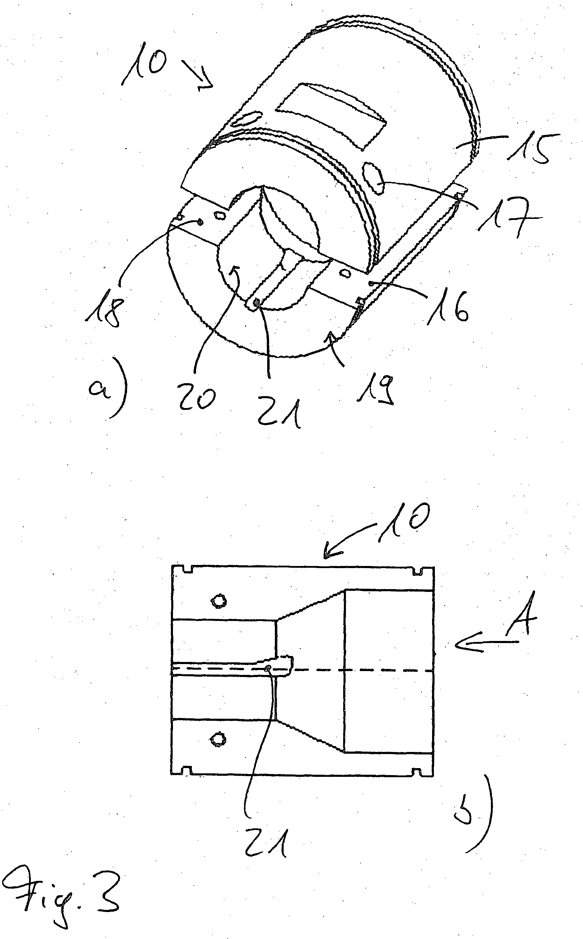

In Figur 3a ist eine aus zwei halbschalenförmigen Teilen 15 und 16 bestehende Mischrohrbuchse 10 gezeigt. Beide Teile 15 und 16 ergänzen sich im zusammengebauten Zustand zu der Mischrohrbuchse 10 mit trichterförmigem Innenraum. Beide Teile 15 und 16 liegen an entsprechenden Auflageflächen 18 an und werden über zwei in Bohrungen 17 eingedrehte Schrauben zusammen gehalten. Die in der Figur nach Vorne zeigende Stirnfläche 19 reicht in die Vakuumkammer hinein. Zu erkennen ist eine in der Innenwandung 20 des Halsbereiches befindliche axial ausgerichtete kanalförmige Nute 21, deren Tiefe größer als die Weite des Ringspaltes ist und mehrere Millimeter aufweist.

In der Schnittdarstellung nach Figur 3b ist diese Nute 21 ebenfalls zu erkennen. Sie führt größere Partikel, die nicht durch den Ringspalt gelangen können, in Förderrichtung (Pfeil A) zur Vakuumkammer.

## Patentansprüche

1. Verfahren zum Entgasen eines Gemisches enthaltend trennbare Komponenten unterschiedlicher Dichte, wobei das Gemisch von einer in einem Gehäuse um eine Rotationsachse (4) umlaufenden Förderschnecke (5) in einem kontinuierlichen Förderstrom zu einer zum Entgasen geeigneten Vakuumkammer befördert wird, wobei der Förderstrom durch einen Einlasskanal (13) in die Vakuumkammer eingepresst, wird, wobei der Förderstrom den Einlasskanal abdichtet,
**dadurch gekennzeichnet,**
**dass** zumindest außen liegende Bereiche des Förderstroms vor dem Eintritt in den Einlasskanal (13) entgegen der von der Förderschnecke (5) hervorgerufenen Fliehkraft durch eine Mischrohrbuchse (10) mit einem in Förderrichtung konisch nach Innen zulaufenden Trichterbereich (11) in Richtung der Rotationsachse (4) abgelenkt werden, um eine Trennung der Komponenten zumindest teilweise zu kompensieren.

2. Verfahren nach Anspruch 1,
**dadurch gekennzeichnet, dass** das Gemisch ein gefülltes oder ungefülltes Bindemittelsystem ist.

3. Verfahren nach Anspruch 1 oder 2,
**dadurch gekennzeichnet, dass** das Gemisch mit Füllstoffen, insbesondere mit Sieblinien organischer und anorganischer Füllstoffe im Größenbereich bis zu etwa 20mm, vermengt ist

4. Verfahren nach einem der vorherigen Ansprüche,
**dadurch gekennzeichnet, dass** die Förderschnecke (5) mit Drehzahlen zwischen 500 und 1500 Umdrehungen pro Minute betrieben wird.

5. Verfahren nach einem der vorherigen Ansprüche,
**dadurch gekennzeichnet, dass** das Gemisch mit einer Fördergeschwindigkeit von mehr als einem Meter pro Minute, insbesondere mit einer Fördergeschwindigkeit zwischen 2 und 12 m/min, in dem rohrförmig ausgebildeten Gehäuse transportiert wird.

6. Verfahren nach einem der vorherigen Ansprüche,
**dadurch gekennzeichnet, dass** als Gemisch Komponenten zur Herstellung von "engineered stone", von Polymerbeton, von Mineralguss oder von "solid surface" eingesetzt werden.

7. Vorrichtung zum Entgasen eines Gemisches zur Durchführung des Verfahrens nach einem der vorherigen Ansprüche, aufweisend eine in einem Gehäuse um eine Rotationsachse (4) umlaufenden Förderschnecke (5), die das Gemisch über eine Mischstrecke zu einer am Ende der Mischstrecke befindliche Vakuumkammer fördert, wobei am Ende der Mischstrecke eine Mischrohrbuchse (10) angeordnet ist, die einen in die Vakuumkammer führenden Einlasskanal (13) ausbildet,
**dadurch gekennzeichnet,**
**dass** die vor dem Eintritt in den Einlasskanal (13) angeordnete Mischrohrbuchse (10) einen in Förderrichtung konisch nach Innen zulaufenden und den Förderstrom in Richtung der Rotationsachse (4) ablenkenden Trichterbereich (11) aufweist, der eine zumindest auf außen liegende Bereiche des Förderstroms wirkende Kraft hervorruft, wobei die Kraft entgegen der von der Förderschnecke (5) hervorgerufenen Fliehkraft nach Innen in Richtung der Rotationsachse (4) wirkt und die Trennung vom im Gemisch vorhandener Komponenten unterschiedlicher Dichte zumindest teilweise kompensiert.

8. Vorrichtung nach Anspruch 7,
**dadurch gekennzeichnet, dass** die Mischrohrbuchse (10) die Welle (6) mit einem Halsbereich (12) umgibt, wobei zwischen der Innenfläche im Halsbereich (12) und der Welle (6) ein Ringspalt verbleibt, der einen in die Vakuumkammer führenden Einlasskanal (13) ausbildet, wobei der Ringspalt eine Spaltweite zwischen einem und wenigen Millimeter, insbesondere von etwa 2 Millimetern, aufweist.

9. Vorrichtung nach Anspruch 8,
**dadurch gekennzeichnet, dass** der Halsbereich (12) eine Länge von mehr als der Hälfte des Innendurchmessers aufweist.

10. Vorrichtung nach einem der Ansprüche 7 bis 9,
**dadurch gekennzeichnet, dass** die Mischrohrbuchse (10) zweiteilig ausgebildet ist.

11. Vorrichtung nach einem der Ansprüche 7 bis 10,
**dadurch gekennzeichnet, dass** die Mischrohrbuchse (10) eine insbesondere axial ausgerichtete Nute (21) aufweist, deren Tiefe größer als die Weite des Ringspaltes ist und insbesondere mehrere Millimeter aufweist.

12. Vorrichtung nach Anspruch 11,
**dadurch gekennzeichnet, dass** die Tiefe der Nute (21) etwa das 1,5 fache der Größe des größten zu erwartenden Kornes des Füllstoffes aufweist.

## Claims

1. A method for degassing a mixture containing separable components of different density, wherein the mixture is conveyed by a screw conveyor (5) rotating in a housing about a rotational axis (4) in a continuous conveying flow to a vacuum chamber suitable for degassing, wherein the conveying flow is pressed through an intake channel (13) into the vacuum chamber, wherein the conveying flow seals the intake channel,
**characterized in that**
at least outer lying regions of the conveying flow are deflected in the direction of the rotational axis (4) before entering the intake channel (13) against the centrifugal force induced by the conveyor screw (5) by a mixing tube bushing (10) having a funnel region (11) tapering conically inwards, in order to compensate at least in part for a separation of the components.

2. The method according to claim 1,
**characterized in that** the mixture is a filled or unfilled binding agent system.

3. The method according to claim 1 or 2
**characterized in that** the mixture is blended with fillers, in particular with grading curves of organic and inorganic fillers in the size range up to roughly 20 mm.

4. The method according to one of the preceding claims,
**characterized in that** the screw conveyor (5) is operated at speeds of between 500 and 1500 revolutions per minute.

5. The method according to one of the preceding claims,
**characterized in that** the mixture is transported at a conveying speed of more than a metre per minute, in particular at a conveying speed of between 2 to 12 m/min, in the tubular shaped housing of tubular design.

6. The method according to one of the preceding claims,
**characterized in that** components for the production of engineered stone, polymer concrete, mineral casting or solid surface are used as the mixture.

7. A device for degassing a mixture for implementing the method according to one of the preceding claims, exhibiting a screw conveyor (5) rotating in a housing about a rotational axis (4), which screw conveyor (5) conveys the mixture over a mixing section to a vacuum chamber located at the end of the mixing section, wherein a mixing tube bushing (10) which forms an intake channel (13) leading into the vacuum chamber is arranged at the end of the mixing section,
**characterized in that**
the mixing tube bushing (10) arranged upstream of the entry into the intake channel (13) has a funnel region (11) tapering conically inwards in the conveying direaction and deflecting the conveying flow in the direction of the rotational axis (4), which funnel region causes a force acting at least on outer lying regions of the conveying flow, wherein the force acts against the centrifugal force induced by the screw conveyor (5) inwards in the direction of the rotational axis (4) and compensates at least in part for the separation of components of different density present in the mixture.

8. The device according to claim 7,
**characterized in that** the mixing tube bushing (10) surrounds the shaft (6) with a neck region, wherein an annular gap remains between the inner surface in the neck region (12) and the shaft (6), which annular gap forms an intake channel (13) leading into the vacuum chamber, wherein the annular gap has a gap width of between one and a few millimetres, in particular of roughly 2 millimetres.

9. The device according to claim 8,
**characterized in that** the neck region (12) has a length of more than half the inner diameter.

10. The device according to one of claims 7 to 9,
**characterized in that** the mixing tube bushing (10) is of two-part design.

11. The device according to one of claims 7 to 10,
**characterized in that** the mixing tube bushing (10) has a particularly axially aligned groove (21), the depth of the groove (21) is greater than the width of the annular gap and, in particular measures several millimetres.

12. The device according to claim 11,
**characterized in that** the depth of the groove (21) is roughly 1.5 times the size of the largest grain of filler material that is to be expected.

## Revendications

1. Procédé pour dégazage d'un mélange contenant des composants séparables de densité différente, le mélange étant transporté par un transporteur à vis sans fin (5) tournant dans un boîtier autour d'un axe de rotation (4) dans un flux de transport continu vers une chambre à vide adaptée au dégazage, le flux de transport étant comprimé dans la chambre à vide par un canal d'admission (13), le flux de transport étanchéifiant le conduit d'admission,
**caractérisé en ce**
**qu'**au moins les zones du flux de transport, situées à l'extérieur, sont déviées avant l'entrée dans le conduit d'admission (13) à l'opposé de la force centrifuge causée par le transporteur à vis sans fin (5) en direction de l'axe de rotation (4) par une douille tubulaire de mélange (10) avec une zone en trémie (11) finissant comiquement vers l'intérieur dans le sens du transport, pour compenser au moins partiellement une séparation des composants.

2. Procédé selon la revendication 1,
**caractérisé en ce que** le mélange est un système de liant rempli ou non rempli.

3. Procédé selon la revendication 1 ou 2,
**caractérisé en ce que** le mélange est mélangé avec des matières de remplissage, en particulier avec des courbes granulométriques des matières de remplissage organiques et minérales dans une plage de dimensions allant jusqu'à environ 20 mm.

4. Procédé selon l'une quelconque des revendications précédentes,
**caractérisé en ce que** le transporteur à vis sans fin (5) est actionné à des vitesses de rotation entre 500 et 1500 tours par minute.

5. Procédé selon l'une quelconque des revendications précédentes,
**caractérisé en ce que** le mélange est transporté dans le boîtier constitué de forme tubulaire à une vitesse de transport de plus d'un mètre par minute, en particulier à une vitesse de transport entre 2 et 12 m/min.

6. Procédé selon l'une quelconque des revendications précédentes,
**caractérisé en ce que** des composants pour la fabrication de pierre reconstituée, de béton polymère, de fonte minérale ou de surface solide sont utilisés comme mélange.

7. Dispositif pour dégazage d'un mélange pour exécuter le procédé selon l'une quelconque des revendications précédentes, comprenant un transporteur à vis sans fin (5) tournant dans un boîtier autour d'un axe de rotation (4), qui transporte le mélange sur une distance de mélange vers une chambre à vide se trouvant à l'extrémité de la distance de mélange, une douille tubulaire de mélange (10) étant disposée à l'extrémité de la distance de mélange, qui constitue un conduit d'admission (13) conduisant dans la chambre à vide,
**caractérisé en ce que**
la douille tubulaire de mélange (10) disposée avant l'entrée du conduit d'admission (13) comporte une zone en trémie (11) finissant coniquement vers l'intérieur dans le sens du transport et déviant le flux de transport dans le sens de l'axe de rotation (4), qui engendre une force agissant au moins sur les zones du flux de transport, situées à l'extérieur, la force agissant vers l'intérieur en direction de l'axe de rotation (4) à l'encontre de la force centrifuge engendrée par le transporteur à vis sans fin (5) et compensant au moins en partie la séparation des composants de densité différentie, existant dans le mélange.

8. Dispositif selon la revendication 7,
**caractérisé en ce que** la douille tubulaire de mélange (10) entoure l'arbre (6) avec une zone en forme de col (12), un interstice annulaire restant entre la surface intérieure dans la zone en forme de col (12) et l'arbre (6), qui constitue un conduit d'admission (13) conduisant dans la chambre à vide, l'interstice annulaire comportant un espacement entre un et quelques millimètres, en particulier d'environ 2 millimètres.

9. Dispositif selon la revendication 8,
**caractérisé en ce que** la zone en forme de col (12) comporte une longueur de plus de la moitié du diamètre intérieur.

10. Procédé selon l'une quelconque des revendications 7 à 9,
**caractérisé en ce que** la douille tubulaire de mélange (10) est constitué en deux parties.

11. Dispositif selon l'une quelconque des revendications 7 à 10,
**caractérisé en ce que** la douille tubulaire de mélange (10) comporte une rainure (21) en particulier orientée axialement, dont la profondeur est plus grande que la largeur de l'interstice annulaire et comporte en particulier plusieurs millimètres.

12. Dispositif selon la revendication 11,
**caractérisé en ce que** la profondeur de la rainure (21) représente à peu près 1,5 fois la taille du grain le plus gros à attendre de la matière de remplissage.
